# EUROPEAN PATENT APPLICATION

(11) **EP 4 822 071 A1**
(43) Date of publication of application: **14.10.2026**
(21) Application number: 24808830.4
(22) Date of filing: 16.03.2024
(51) Int. Cl.: D04B 21/10, A01K 75/00, D04G 1/00

(54) **LATTICED RASCHEL NET AND METHOD FOR PRODUCING SAME**

(30) Priority: 04.12.2023 JP 2023204968
(71) Applicant: Panatexs Co., Ltd., Fukui City, Fukui 910-0853 (JP)
(72) Inventor: SASAKI, Etsuzo, Fukui City, Fukui 910-0853 (JP); SASAKI, Hidezo, Osaka City, Osaka 550-0015 (JP); SASAKI, Tsuneyoshi, Tokyo 165-0034 (JP)
(74) Representative: Goddar, Heinz J.
(86) International application number: PCT/JP2024/010394
(87) International publication number: WO 2025/120876

(57) **Abstract**

To provide a latticed raschel net with excellent strength in the vertical and horizontal directions and a manufacturing method of the same.

The present invention is a latticed raschel net 10 comprising a plurality of vertical fiber filament bodies 1 arranged at regular intervals and a plurality of horizontal fiber filament bodies 2 arranged at regular intervals in a latticed pattern, wherein the vertical fiber filament body 1 is a chain-knit structure with vertical fiber loops 1a that are continuous in vertical direction, and the horizontal fiber filament body 2 is a chain-knit structure with horizontal fiber loops 2a that are continuous in horizontal direction.

## Description

### Technical field

The present invention relates to a latticed raschel net which has excellent strength in the vertical and horizontal directions and can be used for various applications, and a manufacturing method of the same.

### Background Art

Nets are used for various purposes.

For example, a fiber net comprises a fine mesh portion which is stretched between support members such as posts or ropes, disposed between the support members, and formed as a fine mesh structure, and a coarse mesh portion which is disposed at least one end of the fine mesh portion, formed with a coarser mesh structure than the fine mesh portion, and configured to allow the support member to pass therethrough is known (see, for example, Patent Document 1). It is described that such fiber nets are used for safety nets, fishing nets, and ball nets for catching small balls such as ping pong balls and golf balls.

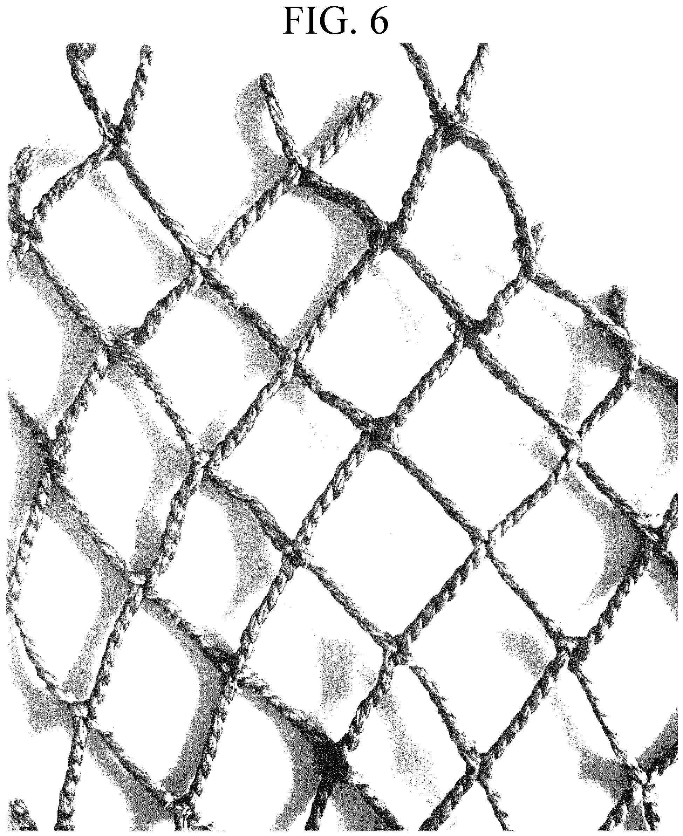

In addition, as shown in FIG. 6, a net formed by twisting threads so that voids are shaped into a diamond pattern is commercially available.

### Citation List

### Patent Document

Patent Document 1: Japanese Patent Application Laid-Open No. 2008-138517

### Summary of Invention

### Technical Problem

The net described in Patent Document 1 and the net shown in FIG. 6 exhibit the property of transforming the diamond-shaped meshes to a latticed pattern only when subjected to stress in both vertical and horizontal directions.

However, these nets have insufficient strength in the vertical and horizontal directions when tension is applied because the yarn strips are formed diagonally and the intersection portions are X-shaped.

The present invention was made in view of the above circumstances, and the object of the present invention is to provide a latticed raschel net with excellent strength in the vertical and horizontal directions (vertical direction and horizontal direction) and a manufacturing method of the same.

### Solution to Problems

The inventors have diligently studied to solve the above problem and found that the above problem can be solved by making a vertical fiber filament body and a horizontal fiber filament body arranged in a latticed pattern both comprise of a chain-knit structure with continuous fiber loops, and have completed the present invention.

The present invention is a latticed raschel net comprising a plurality of vertical fiber filament bodies arranged at regular intervals and a plurality of horizontal fiber filament bodies arranged at regular intervals in a latticed pattern, wherein the vertical fiber filament body is a chain-knit structure with vertical fiber loops that are continuous in vertical direction and the horizontal fiber filament body is a chain-knit structure with horizontal fiber loops that are continuous in horizontal direction.

In the latticed raschel net of the present invention, it is preferable that the chain-knit structure is knitted by raschel knitting.

It is preferable that, in the latticed raschel net of the present invention, the vertical fiber filament body comprises a vertical connecting loop portion for connecting with the horizontal fiber filament body between the continuous vertical fiber loops, and the horizontal fiber filament body comprises a horizontal connecting loop portion for connecting with the vertical fiber filament body between the continuous horizontal fiber loops, wherein the vertical connecting loop and the horizontal connecting loop are interlocked at an intersection portion where the vertical fiber filament body and the horizontal fiber filament body intersect.

More specifically, it is preferable that the vertical connecting loop portion preferably consists of consecutive two loops, namely an upper vertical connecting loop and a lower vertical connecting loop, while the horizontal connecting loop portion is a single loop comprising a first yarn portion and a second yarn portion, wherein the upper vertical connecting loop interlocks with the first yarn portion, and the lower vertical connecting loop interlocks with the second yarn portion.

It is preferable that the latticed raschel net of the present invention is one in which a yarn constituting the vertical fiber filament body and/or a yarn constituting the horizontal fiber filament body comprise of a thermally fusible synthetic fiber yarn, and the thermally fusible synthetic yarn is cured by heat treatment.

It is preferable that the latticed raschel net of the present invention is used as a fishing net.

The present invention is a manufacturing method of a latticed raschel net comprising: a first step of knitting horizontal fiber filament bodies in advance by raschel knitting; a second step of knitting vertical fiber filament bodies by raschel knitting; and a third step of knitting the vertical fiber filament bodies by raschel knitting while inserting the horizontal fiber filament bodies horizontally at regular intervals.

The present invention is a manufacturing method of a latticed raschel net comprising: a first step of knitting horizontal fiber filament bodies in advance by raschel knitting; a second step of knitting vertical fiber filament bodies by raschel knitting; a third step of knitting the vertical fiber filament bodies by raschel knitting while inserting the horizontal fiber filament bodies horizontally at regular intervals; and a fourth step of performing heat treatment to cure the thermally fusible synthetic fiber yarn.

### Advantageous Effects of Invention

Since the latticed raschel net is made of the vertical fiber filament bodies and the horizontal fiber filament bodies arranged in the latticed pattern, there is no need of spreading and applying more stress specially than necessary in the vertical and horizontal directions to change the diamond-shaped eyes to a latticed pattern.

In addition, since the vertical fiber filament bodies and the horizontal fiber filament bodies are arranged in the latticed pattern, it has superior strength in the vertical and horizontal directions.

Since the vertical fiber filament body comprises continuous vertical fiber loops and the horizontal fiber filament body comprises continuous horizontal fiber loops, and both are the chain-knit structures, the latticed raschel net of the present invention has flexibility, and since these loops extend across the entire width in both the vertical and horizontal directions, the latticed raschel net can exhibit enhanced strength.

Furthermore, since the chain-knit structures are formed by raschel knitting and the fiber density becomes more compact, the lattice-shaped raschel net can achieve superior strength while maintaining a certain degree of flexibility.

Furthermore, in the latticed raschel net, since it is formed as the latticed shape, there is no limitation in the vertical length, and the horizontal length can be up to approximately 15 meters, and the size can be suitably customized.

Incidentally, since nets having voids shaped into a diamond pattern are formed diagonally, their vertical and horizontal length are restricted when they are stretched into a latticed pattern.

As a result, it is difficult to make such nets particularly as wide or elongated shape.

In addition, the obtained latticed raschel net, due to its latticed shape, differs from diamond-shaped nets, for example, enables the simultaneous formation of edge portions with ear portions during knitting.

In the latticed raschel net of the present invention, by interlocking the vertical connecting loop portion and the horizontal connecting loop portion at the intersection portion, extremely strong connection between the vertical fiber filament body and the horizontal fiber filament body at the intersection portion can be made.

In addition, since the upper vertical connecting loop interlocks with the first yarn portion and the lower vertical connecting loop interlocks with the second yarn portion, the nodule becomes stronger and the vertical fiber filament body can be securely prevented from shifting in the vertical or horizontal direction relative to the horizontal fiber filament body.

In addition, this also has the advantage that the node of the nodule does not clearly protrude outward.

In the latticed raschel net of the present invention, since the yarn constituting the vertical fiber filament body and/or the yarn constituting the horizontal fiber filament body comprise of the thermally fusible synthetic fiber yarns, the thermally fusible synthetic fiber yarns can be cured in accordance with the intended application.

As a result, it becomes possible to obtain a configuration in which both the vertical fiber filament body and the horizontal fiber filament body are cured, or a configuration in which either the vertical fiber filament body or the horizontal fiber filament body are hardened.

As described above, the latticed raschel net of the present invention has a latticed shape and sufficient strength in the vertical and horizontal directions, making it suitable for use as a fishing net that requires a large area and a high degree of strength.

The manufacturing method of the latticed raschel net of the present invention can be easily realized by using a so-called raschel knitting machine for the first, second and third steps.

In addition, the first step, the second step, and the third step are all commonly performed through the raschel knitting, and in the third step, it suffices to add the operation of inserting the horizontal fiber filament body into the second step.

Therefore, according to the manufacturing method of the latticed raschel net, it is possible to manufacture the latticed raschel net inexpensively and relatively easily.

In addition to this, by comprising the fourth step, the thermoplastic fibers mentioned above can be cured.

### Brief Description of Drawing

FIG. 1 is a schematic plane view roughly showing a latticed raschel net according to the present embodiment.
FIG. 2 (a) is a schematic plane view of an enlarged portion of the latticed raschel net shown in FIG. 1, and FIG. 2 (b) is a schematic plan view of a horizontal fiber filament body of the latticed raschel net shown in FIG. 2 (a).
FIG. 3 (a) is an organization drawing of an intersection portion in a manufacturing method of the latticed raschel net according to the present embodiment, and FIG. 3 (b) is a stitch drawing of the intersection portion in the manufacturing method of the latticed raschel net according to the present embodiment.
FIG. 4 is a flow diagram showing the manufacturing method of the latticed raschel net according to the present embodiment.
FIG. 5 is a photograph showing the latticed raschel net manufactured by the manufacturing method of the latticed raschel net according to the present embodiment.
FIG. 6 is a photograph showing a conventional net.

### Description of Embodiments

Hereinafter, preferred embodiments of the present invention will be described in detail with reference to the drawing as necessary.

It should be noted that, in the drawings, the same components are provided with the same reference numeral and redundant description is omitted.

In addition, unless otherwise specified, positional relationships such as up, down, left, right will be based on the positional relationships shown in the drawing.

Furthermore, the dimensional ratios of the drawing are not limited to those shown in the drawing.

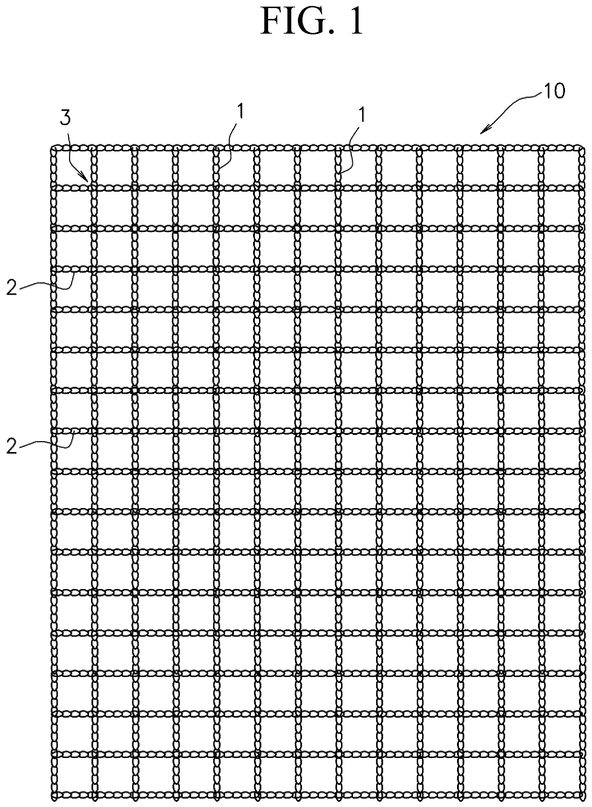

FIG. 1 is a schematic plane view roughly showing a latticed raschel net according to the present embodiment.

As shown in FIG. 1, the latticed raschel net 10 according to the present embodiment comprises of a plurality of vertical fiber filament bodies 1 arranged in the horizontal direction at predetermined intervals and a plurality of horizontal fiber filament bodies 2 arranged in the vertical direction at predetermined intervals.

That is, the latticed raschel net 10 is configured such that the vertical fiber filament bodies 1 and the horizontal fiber filament bodies 2 are extended across the entire width and arranged in a latticed shape so as to intersect orthogonally with each other.

It should be noted that the lattice may take the form of a square or a rectangle.

Here, the vertical fiber filament bodies 1 refer to fiber-based filament bodies extending vertically, while the horizontal fiber filament bodies 2 refer to fiber-based filament bodies extending horizontally.

It is preferable that the predetermined interval between adjacent vertical fiber filament bodies 1 is, for example, 1 to 10 cm, and similarly, the predetermined interval between adjacent horizontal fiber filament bodies 2 is preferably 1 to 10 cm, and furthermore, it is more preferable that these intervals are identical (the lattice is square shape).

In the latticed raschel net 10, the vertical fiber filament bodies 1 and the horizontal fiber filament bodies 2 are composed of fiber-based materials. As a result, the latticed raschel net 10 exhibits excellent flexibility, allowing it to be bent or rolled into a cylindrical form.

It should be noted that, as described later, when the material of the vertical fiber filament bodies 1 and horizontal fiber filament bodies 2 is a thermally fusible synthetic fiber yarn, the latticed raschel net 10 prior to heat treatment also possesses excellent flexibility.

Accordingly, the latticed raschel net 10 can be employed in a wide range of applications as a substitute for conventional nets (meshes) such as safety net, an animal deterrent net, a bird deterrent net, an agricultural net, a livestock net, a fishing net, and a shark protection net.

Among these applications, the latticed raschel net 10 is particularly suitable for use as the fishing net having large surface areas and being required a certain level of strength since it has the latticed shape and excellent strength in both the vertical and horizontal directions.

In the latticed raschel net 10, the yarn constituting the vertical fiber filament bodies 1 and the horizontal fiber filament bodies 2 are not particularly limited, and examples include natural fibers such as cotton, hemp, linen, wool, cashmere, silk, and jute; synthetic fibers such as polyester fibers, polyamide fibers, polyurethane fibers, polyacrylonitrile fibers, polyvinyl alcohol fibers, polyvinyl chloride fibers, polypropylene fibers, polyethylene fibers, and polystyrene fibers; or blended fibers obtained by mixing different types of these fibers. The threads used to constitute the vertical fiber filament bodies 1 and those used to constitute the horizontal fiber filament bodies 2 may be of the same type or of different types.

The yarn constituting the vertical fiber filament bodies 1 and the horizontal fiber filament bodies 2 can be selected according to the intended application.

Among these, from the perspectives of strength, durability, and versatility, it is preferable that the yarn constituting the vertical fiber filament bodies 1 and the horizontal fiber filament bodies 2 is made of synthetic fibers.

Furthermore, it is also possible to employ the thermally fusible synthetic fiber yarn as the synthetic fiber.

That is, the thermally fusible synthetic fiber yarn can be used as the yarn constituting the vertical fiber filament bodies 1 and/or the horizontal fiber filament bodies 2.

In this case, the thermally fusible synthetic fiber yarn can be cured by heat treatment.

It should be noted that, in the case where the latticed raschel net is to be used as a substitute for conventional wire mesh, the thermally fusible synthetic fiber yarn can be employed for both the vertical fiber filament bodies 1 and the horizontal fiber filament bodies 2, and these can be cured; if an intermediate strength between wire mesh and fibers is desired, or if the net is to be rolled up for storage or transportation, the thermally fusible synthetic fiber yarn can be used for one of the vertical fiber filament bodies 1 or the horizontal fiber filament bodies 2, and a synthetic fiber other than the thermally fusible synthetic fiber yarn can be used for the other, with only the thermally fusible synthetic fiber yarn being cured.

Here, as the thermally fusible synthetic fiber yarn, a yarn (filament) made of a thermoplastic fiber such as a polyester fiber, a polyamide fiber (nylon), a polyethylene fiber, a polypropylene fiber, and the like can be used.

Among these, it is more preferable to employ the polyester fiber, which offers excellent versatility and strength, and it is even more preferable to use the polyester fiber, such as the polyester fiber with a core-sheath structure, in which a high-melting-point polyester is used for the core and a low-melting-point polyester is used for the sheath (e.g., trade name: MELSET (registered trademark)).

The vertical fiber filament bodies 1 and/or the horizontal fiber filament bodies 2 are formed by using a multifilament yarn (a bundle of yarns) that are knitted into a chain-knit.

It should be noted that the multifilament yarn made of the thermoplastic fiber is deformable before heat treatment, however, upon undergoing heat treatment, each of the individual multifilament fuses together and become integrated, thus it is cured in the shape defined during the heat treatment.

In the latticed raschel net 10, it is preferable that the fineness of the multifilament yarn constituting the vertical fiber filament bodies 1 and the horizontal fiber filament bodies 2 is in the range of 50 to 80,000 dtex.

This ensures that the net possesses sufficient strength.

It should be noted that such yarn may be either a raw yarn or a processed yarn.

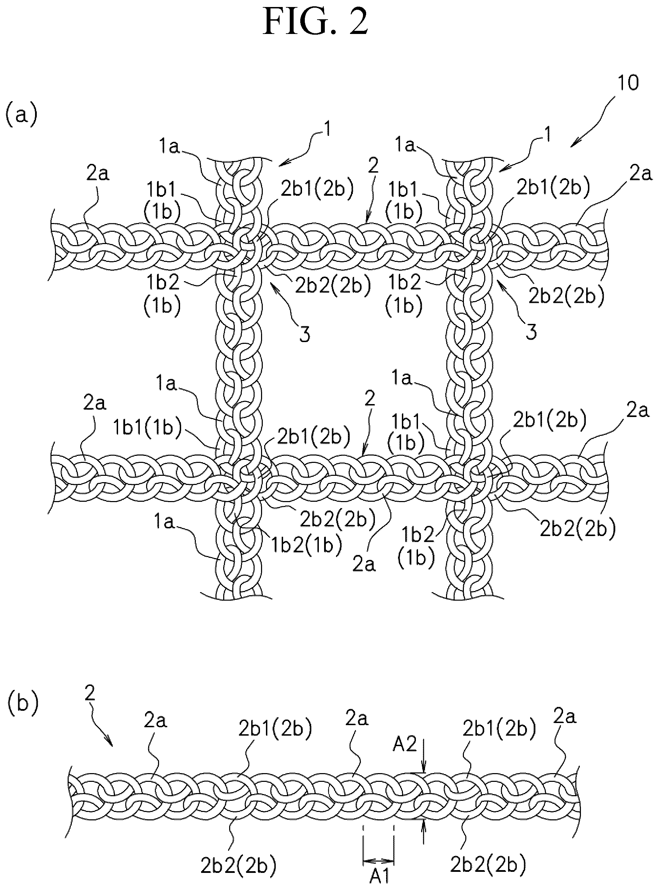

FIG. 2 (a) is a schematic plane view of an enlarged portion of the latticed raschel net shown in FIG. 1, and FIG. 2 (b) is a schematic plan view of a horizontal fiber filament body of the latticed raschel net shown in FIG. 2 (a).

As shown in FIG. 2(a), in the latticed raschel net 10, both the vertical fiber filament bodies 1 and the horizontal fiber filament bodies 2 are knitted into a chain stitch structure in which loops are continuous.

It should be noted that both the vertical fiber filament bodies 1 and the horizontal fiber filament bodies 2 are formed by raschel knitting using a raschel knitting machine.

The vertical fiber filament bodies 1 and the horizontal fiber filament bodies 2 are interconnected at intersection portions 3, where they intersect with each other.

Since the latticed raschel net 10 has a chain stitch structure, it possesses flexibility while also being capable of exhibiting sufficient strength.

Furthermore, since the latticed raschel net 10 is formed by raschel knitting, its fiber density becomes more compact, resulting in a structure that maintains a certain level of flexibility while offering superior strength.

As shown in FIG. 2(b), the horizontal fiber filament bodies 2 include fiber-based loops that are continuous in the horizontal direction (hereinafter referred to as "horizontal fiber loops") 2a, and loops provided between the continuous horizontal fiber loops 2a to connect them (hereinafter referred to as "horizontal connecting loops") 2b.

That is, the horizontal fiber filament bodies 2 are configured such that the horizontal connecting loops 2b are formed at regular intervals between the continuous horizontal fiber loops 2a.

In the horizontal fiber filament bodies 2, the horizontal fiber loops 2a form a continuous group of horizontal fiber loops.

The number of horizontal fiber loops 2a in a single group of horizontal fiber loops, which is sandwiched between horizontal connecting loops 2b, is preferably between 3 and 30 from the perspective of balancing weight reduction and strength.

The length A1 of the horizontal fiber loops 2a in the longitudinal direction is preferably between 1 and 20 mm.

It should be noted that the length A1 of the horizontal fiber loops 2a in the longitudinal direction is defined as the length A1 from the intersection point of one of the adjacent horizontal fiber loops 2a to the intersection point with the other adjacent horizontal fiber loop 2a.

In addition, the width A2 of the horizontal fiber loops 2a is preferably between 1 and 20 mm.

In the horizontal fiber filament bodies 2, the horizontal connecting loops 2b are loops for connecting with the vertical fiber filament bodies 1.

It should be noted that the length and width of the horizontal connecting loops 2b are the same as the length A1 and the width A2 of the horizontal fiber loops 2a.

The horizontal connecting loop 2b is a single loop that includes a first yarn portion 2b1 on one side and a second yarn portion 2b2 on the other side. That is, the horizontal connecting loop 2b is loop-shaped, with the first yarn portion 2b1 forming the upper semicircular arc portion and the second yarn portion 2b2 forming the lower semicircular arc portion.

It should be noted that the first yarn portion 2b1 and the second yarn portion 2b2 are formed from the same thread, as they are both knitted by raschel knitting.

Returning to FIG. 2(a), the vertical fiber filament bodies 1 include fiber-based loops that are continuous in the vertical direction (hereinafter referred to as "vertical fiber loops") 1a, and a loop portion for connecting the continuous vertical fiber loops 1a (hereinafter referred to as "vertical connecting loop portion") 1b, which is provided between the continuous vertical fiber loops 1a.

That is, the vertical fiber filament bodies 1 are configured such that the vertical connecting loop portion 1b is inserted at regular intervals between the continuous vertical fiber loops 1a.

In the vertical fiber filament bodies 1, the vertical fiber loops 1a form a continuous group of vertical fiber loops.

The number of vertical fiber loops 1a in one vertical fiber loop group, which is sandwiched between vertical connecting loop portions 1b, is preferably from 3 to 30, from the perspective of balancing weight reduction and strength.

It is also preferable that the number of vertical fiber loops 1a in the vertical fiber loop group is the same as the number of horizontal fiber loops 2a in the horizontal fiber loop group.

It should be noted that the length and width of the vertical fiber loops 1a are the same as the length A1 and width A2 of the horizontal fiber loops 2a.

In the vertical fiber filament bodies 1, the vertical connecting loop portion 1b is the portion for connecting with the horizontal fiber filament bodies 2.

It should be noted that the length and width of the vertical connecting loop portion 1b are the same as the length A1 and width A2 of the horizontal fiber loops 2a.

The vertical connecting loop portion 1b comprises of two loops: an upper vertical connecting loop 1b1 which is continuous and in upper position; and a lower vertical connecting loop 1b2 located directly below the upper vertical connecting loop 1b1.

It should be noted that each individual loop constituting the vertical fiber loop 1a, the upper vertical connecting loop 1b1, and the lower vertical connecting loop 1b2 are all loops of the same structure.

In the latticed raschel net 10, at the intersection portion 3 where the vertical fiber filament body 1 and the horizontal fiber filament body 2 intersect, the horizontal connecting loop 2b of the horizontal fiber filament body 2 is connected with the vertical connecting loop portion 1b of the vertical fiber filament body 1.

Specifically, the upper vertical connecting loop 1b1 of the vertical connecting loop portion 1b interlocks with the first yarn portion 2b1 of the horizontal connecting loop 2b, and the lower vertical connecting loop 1b2 of the vertical connecting loop portion 1b interlocks with the second yarn portion 2b2 of the horizontal connecting loop 2b.

This results in a firm connection between the vertical fiber filament body 1 and the horizontal fiber filament body 2 at the intersection portion 3, preventing any shifting of the vertical fiber filament body 1 in the vertical or horizontal direction relative to the horizontal fiber filament body 2.

As described above, the latticed raschel net 10 can be manufactured by a raschel knitting machine.

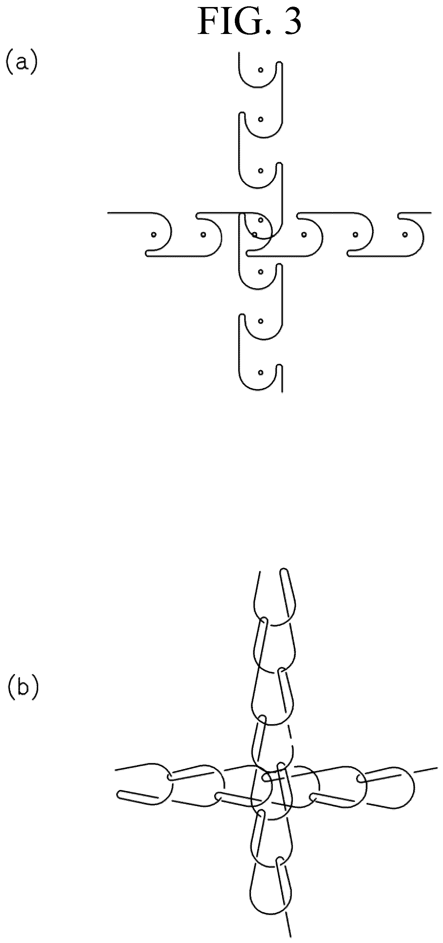

FIG. 3 (a) is an organization drawing of an intersection portion in a manufacturing method of the latticed raschel net according to the present embodiment, and FIG. 3 (b) is a stitch drawing of the intersection portion in the manufacturing method of the latticed raschel net according to the present embodiment.

The latticed raschel net 10 is knitted based on the organization drawing shown in FIG. 3(a).

Additionally, the latticed raschel net 10 is knitted to form the stitch pattern shown in FIG. 3(b).

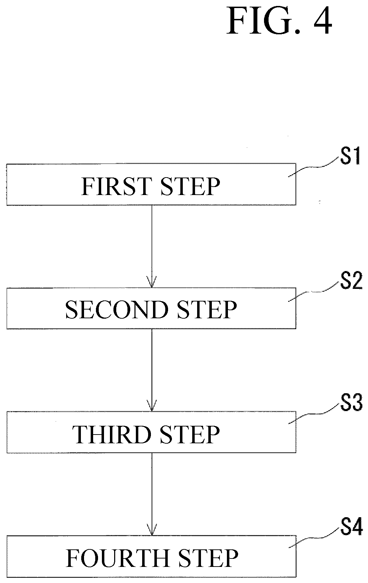

FIG. 4 is a flow diagram showing the manufacturing method of the latticed raschel net according to the present embodiment.

As shown in FIG. 4, the manufacturing method of the latticed raschel net 10 according to the present embodiment includes a first step S1 of knitting the horizontal fiber filament bodies 2 by raschel knitting, a second step S2 of knitting the vertical fiber filament bodies 1 by raschel knitting, a second step S2 of knitting the second yarn in the vertical direction by raschel knitting, while inserting the horizontal fiber filament bodies 2 at a certain interval in the horizontal direction, a third step of knitting the vertical fiber filament bodies 1 by raschel knitting, while inserting the horizontal fiber filament bodies 2 at a certain interval in the horizontal direction, and, if necessary, a fourth step S4 of performing heat treatment to cure a thermally fusible synthetic fiber yarn.

In the manufacturing method of the latticed raschel net 10, the first step S1, the second step S2, and the third step S3 are performed by using a raschel knitting machine.

In addition, the fourth step S4 is performed when using the aforementioned thermally fusible synthetic fiber yarn as the yarn for knitting.

In addition, in the first step S1 and the second step S2, the vertical fiber filament body 1 and the horizontal fiber filament body 2 are similarly manufactured by raschel knitting.

It should be noted that no so-called insertion yarn is used in the first step S1 and the second step S2.

In the third step S3, the vertical fiber filament body 1 is knitted by raschel knitting.

At this time, the horizontal fiber filament body 2 is used as the so-called insertion yarn.

Specifically, in the third step S3, the horizontal connecting loops 2b of the regularly inserted horizontal fiber filament body 2 are knitted so that they interlocked at the vertical connecting loop portion 1b when the vertical fiber filament body 1 is knitted, thereby the intersection portion 3 is formed.

That is, the third step S3 is performed continuously after the second step S2.

As a result, a latticed raschel net 10 is obtained, in which the filament bodies extend linearly across the entire width in both the vertical and horizontal directions (i.e., the full width in the vertical direction and full width in the horizontal direction of the latticed raschel net).

The fourth step S4 is performed, as mentioned above, when using the thermally fusible synthetic fiber yarn as the yarn for knitting.

It should be noted that this heating is performed at a temperature at which at least a portion of the thermally fusible synthetic fiber yarn melts, using a conventional heating device.

Afterwards, cooling is performed by methods such as air cooling. It should be noted that, since the latticed raschel net 10 is cured in the shape during heating, it is preferable to pre-shape it into the desired form before performing the heating.

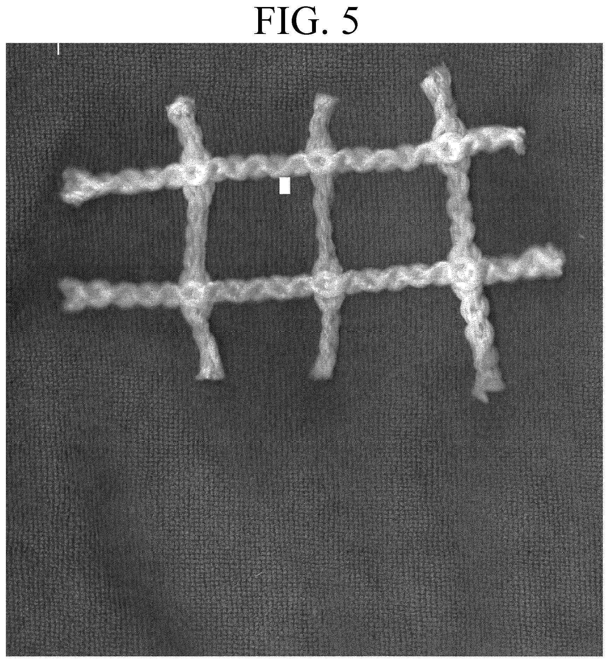

FIG. 5 is a photograph showing the latticed raschel net manufactured by the manufacturing method of the latticed raschel net according to the present embodiment.

As shown in FIG. 5, since the manufacturing method of the latticed raschel net 10 includes the first step S1, the second step S2, and the third step S3, the latticed raschel net 10 can be manufactured inexpensively and relatively easily.

Additionally, by including the fourth step S4, it becomes possible to cure the latticed raschel net 10.

Although a preferred embodiment of the present invention is explained above, the present invention is not limited to the aforementioned embodiment.

In the latticed raschel net 10 according to the present embodiment, it is not necessarily required to employ the thermally fusible synthetic fiber yarn.

In the latticed raschel net 10 according to the present embodiment, edge portions may be provided with an ear portion (a selvage).

It should be noted that such ear portion may be simultaneously formed during the knitting process by raschel knitting, or alternatively, the ear portion may be formed separately by sewing.

Although the manufacturing method of the latticed raschel net 10 according to the present embodiment includes the first step S1, the second step S2, the third step S3, and the fourth step S4, it is not necessarily required to include the fourth step S4.

### Industrial Applicability

The latticed raschel net according to the present invention can be utilized as a net.

The latticed raschel net according to the present invention has high strength in both the vertical and horizontal directions, making it suitable as a replacement for conventional nets, and is particularly suitable for use as a fishing net.

### Reference Signs List

- 1: vertical fiber filament body
- 10: latticed raschel net
- 1a: fiber loop (vertical fiber loop)
- 1b: vertical connecting loop portion
- 1b1: upper vertical connecting loop
- 1b2: lower vertical connecting loop
- 2: horizontal fiber filament body
- 2a: fiber loop (horizontal fiber loop)
- 2b: horizontal connecting loop
- 2b1: first yarn portion
- 2b2: second yarn portion
- 3: intersection portion
- S1: first step
- S2: second step
- S3: third step
- S4: fourth step

## Claims

1. A latticed raschel net (10) comprising a plurality of vertical fiber filament bodies (1) arranged at regular intervals and a plurality of horizontal fiber filament bodies (2) arranged at regular intervals in a latticed pattern, wherein
the vertical fiber filament body (1) is a chain-knit structure with vertical fiber loops (1a) that are continuous in vertical direction, and
the horizontal fiber filament body (2) is a chain-knit structure with horizontal fiber loops (2a) that are continuous in horizontal direction.

2. The latticed raschel net (10) according to claim 1, wherein the chain-knit structure is knitted by raschel knitting.

3. The latticed raschel net (10) according to claim 1, wherein
the vertical fiber filament body (1) comprises a vertical connecting loop portion (1b) for connecting with the horizontal fiber filament body (2) between the continuous vertical fiber loops (1a), and
the horizontal fiber filament body (2) comprises a horizontal connecting loop portion (2b) for connecting with the vertical fiber filament body (1) between the continuous horizontal fiber loops (2a), wherein
the vertical connecting loop portion (1b) and the horizontal connecting loop portion (2b) are interlocked at an intersection portion (3) where the vertical fiber filament body (1) and the horizontal fiber filament body (2) intersect.

4. The latticed raschel net (10) according to claim 3, wherein
the vertical connecting loop portion (1b) preferably consists of consecutive two loops, an upper vertical connecting loop (1b1) and a lower vertical connecting loop (1b2),
the horizontal connecting loop portion (2b) is a single loop comprising a first yarn portion (2b1) and a second yarn portion (2b2), wherein
the upper vertical connecting loop (1b1) interlocks with the first yarn portion (2b1), and
the lower vertical connecting loop (1b2) interlocks with the second yarn portion (2b2).

5. The latticed raschel net (10) according to claim 1, wherein
a yarn constituting the vertical fiber filament body (1) and/or a yarn constituting the horizontal fiber filament body (2) comprise of a thermally fusible synthetic fiber yarn, and
the thermally fusible synthetic yarn is cured by heat treatment.

6. The latticed raschel net (10) according to any one of claim 1 to 5, wherein the latticed net is used as a fishing net.

7. A manufacturing method of the latticed raschel net (10) according to claim 3 or 4, wherein the manufacturing method comprises:
a first step (S1) of knitting horizontal fiber filament bodies (2) in advance by raschel knitting;
a second step (S2) of knitting vertical fiber filament bodies (1) by raschel knitting; and
a third step (S3) of knitting the vertical fiber filament bodies (1) by raschel knitting while inserting the horizontal fiber filament bodies (2) horizontally at regular intervals.

8. The manufacturing method of the latticed raschel net (10) according to claim 5, wherein the manufacturing method comprises:
a first step (S1) of knitting horizontal fiber filament bodies (2) in advance by raschel knitting;
a second step (S2) of knitting vertical fiber filament bodies (1) by raschel knitting;
a third step (S3) of knitting the vertical fiber filament bodies (1) by raschel knitting while inserting the horizontal fiber filament bodies (2) horizontally at regular intervals; and
a fourth step (S4) of performing heat treatment to cure the thermally fusible synthetic fiber yarn.
